# EUROPÄISCHE PATENTSCHRIFT

(11) **EP 0 672 825 B1**
(45) Veröffentlichungstag und Bekanntmachung des Hinweises auf die Patenterteilung: **03.06.1998**
(21) Anmeldenummer: 95102546.9
(22) Anmeldetag: 23.02.1995
(51) Int. Cl.: F02M 35/10

(54) **Saugrohrmodul**
Suction pipe module
Module de tuyau d'aspiration

(30) Priorität: 18.03.1994 DE 4409247
(43) Veröffentlichungstag der Anmeldung: 20.09.1995
(73) Patentinhaber: KNECHT FILTERWERKE GMBH, 70376 Stuttgart (DE); Bayerische Motoren Werke Aktiengesellschaft, 80788 München (DE)
(72) Erfinder: Drespling, Hans-Peter, D-89518 Heidenheim (DE); Pscheidt, Berthold, D-73765 Neuhausen (DE); Schweikert, Klaus, D-74182 Obersulm 3 (DE); Sponagel, Hans-Joachim, D-81541 München (DE); Munk, Friedrich, D-81929 München (DE); Völkl, Werner, D-85419 Mauern (DE)
(74) Vertreter: Dreiss, Fuhlendorf, Steimle & Becker, Patentanwälte

(56) Entgegenhaltungen:
- EP-A- 0 249 286
- DE-A- 3 711 859
- US-A- 5 063 899
- US-A- 5 267 543

## Beschreibung

Die Erfindung betrifft ein Saugrohrmodul für eine wenigstens einen Brennraum aufweisende Brennkraftmaschine mit einer Luftsammeleinrichtung für die Verbrennungsluft, mit einer Turbulenzkanäle aufweisenden ersten Saugrohranlage und einer Resonanzkanäle aufweisenden zweiten Saugrohranlage, gemäß dem Oberbegriff des Anspruchs 1.

Eine derartige Vorrichtung ist aus der US-A-5,267,543 sowie der US-A-5,063,899 bekannt. Diese Vorrichtungen weisen eine Luftsammeleinrichtung auf, in die über ein Drosselventil Luft angesaugt wird und die Luft nach dem Durchtritt durch die Luftsammeleinrichtung in eine erste und eine zweite Saugrohranlage aufgeteilt wird. Dabei sind die Saugkanäle der ersten Saugrohranlage relativ lang ausgebildet und führen die Verbrennungsluft für den unteren Drehzahlbereich. Die Saugkanäle der zweiten Saugrohranlage sind relativ kurz ausgebildet und führen die Luft für den oberen Drehzahlbereich. Zwar kann auf diese Weise, d.h. durch Aufteilung des gesamten Saugrohrmoduls in zwei für unterschiedliche Drehzahlbereiche zuständige Saugrohranlagen der Füllgrad der einzelnen Zylinder erhöht werden. Jedoch hat sich gezeigt, daß das Resonanzverhalten der einzelnen Saugrohranlagen noch nicht optimal ist.

Mit der DE 38 43 509 C2, DT 25 27 774 A1 und der EP 158 046 B1 sind weitere Ansaugsysteme für Brennkraftmaschinen bekannt geworden, die jedoch einen anderen Aufbau aufweisen.

Der Erfindung liegt daher die Aufgabe zugrunde, das eingangs genannte Saugrohrmodul derart auszugestalten, daß die Zylinder in allen Drehzahlbereichen eine bessere Füllung erfahren, im unteren Drehzahlbereich ein höheres Drehmoment und im oberen Drehzahlbereich eine höhere Leistung erreicht wird.

Diese Aufgabe wird erfindungsgemäß durch die kennzeichnenden Merkmale des Anspruchs 1 gelöst.

Durch die Verbindung zweier Saugrohre wird die die Saugrohre aufweisende Saugrohranlage derart abgeändert, daß einerseits die Saugrohre besser und gleichmäßig befüllt werden, andererseits deren Resonanzverhalten durch den Hauptluftverteiler beeinflußbar ist. Durch den zusätzlichen Hauptluftverteiler wird insbesondere die Leistung im oberen Drehzahlbereich angehoben. Dadurch daß der Hauptverteiler wenigstens eine Resonanzsteuerklappe aufweist, über die die Anzahl der miteinander zu verbindenden Saugrohre variierbar ist, kann abhängig von motorischen Parametern über ein Stellglied das Schwingungsverhalten der Verbrennungsluft so gesteuert werden, daß die Luftversorgung des Motors in Form eines Nachladeeffekts verbessert wird. Die wenigstens eine Resonanzsteuerklappe ist derart im Hauptluftverteiler angeordnet, daß er diesen bei geschlossener Klappe bzw. bei geschlossenen Klappen in zwei oder mehrere voneinander unabhängige Kammern unterteilt ist.

Bei einem bevorzugten Ausführungsbeispiel weist die Luftsammeleinrichtung einen Vorluftsammler und einen Turbulenzsammler auf. Auf diese Weise wird bereits in einem frühen Stadium die erste Saugrohranlage von der zweiten getrennt, so daß sich die darin enthaltenen Luftmassen gegenseitig nicht beeinflußen. Außerdem können sowohl der Vorluftsammler als auch der Turbulenzsammler in Form und Größe optimal an die sich anschließenden Saugrohranlagen angepaßt werden.

Ein weiterer Vorteil wird darin gesehen, daß der Vorluftsammler und der Turbulenzsammler separate Ansaugstutzen aufweisen. Diese können nahe beieinander liegen oder räumlich voneinander getrennt sein.

Bei einer bevorzugten Ausführungsform sind der Vorluftsammler und der Turbulenzsammler über einen durch ein Ventil steuerbaren Bypaß miteinander verbunden. Über diesen Bypaß kann das Resonanzsystem zusätzlich gezielt angesteuert und das Resonanzverhalten verändert werden. Außerdem dient dieser Bypaß der besseren Befüllung der Zylinder im niederen Drehzahlbereich, d.h. oberhalb der Leerlaufdrehzahl, in dem ein Teil der Verbrennungsluft aus dem Turbulenzsammler über den Vorluftsammler und die zweite Saugrohranlage den Zylindern zugeführt wird. Auf diese Weise wird der Strömungswiderstand reduziert und die Turbulenzbildung im System verbessert. Auch das Ventil für den Bypaß wird durch Motorparameter angesteuert.

Bevorzugt sind die Ansaugquerschnitte der beiden separaten Ansaugstutzen über Registerdrosselklappen variierbar. Auf diese Weise kann gezielt im unteren Drehzahlbereich die erste Saugrohranlage mit Verbrennungsluft versorgt werden und es wird erst in einem höheren Drehzahlbereich die zweite Saugrohranlage zugeschaltet. Dabei kann, wie bereits erwähnt, über die erste Saugrohranlage nach wie vor Verbrennungsluft zugeführt werden, es kann jedoch auch im oberen Drehzahlbereich die erste Saugrohranlage abgesperrt werden.

Bei einer erfindungsgemäßen Ausgestaltung ist vorgesehen, daß die Turbulenzkanäle relativ kurz sind und die Verbrennungsluft für den unteren Drehzahlbereich führen. Weiterhin sind die Saugrohre relativ lang und führen die Verbrennungsluft für den oberen Drehzahlbereich. Im Gegensatz zur Vorrichtung der US-A-5,267,543, wird die Brennkraftmaschine im Leerlauf über relativ kurze Turbulenzkanäle versorgt. Durch kurze Kanäle kann die Leistung der Brennkraftmaschine erhöht werden. Lange Kanäle hingegen erhöhen das Drehmoment der Maschine. Durch die erfindungsgemäße optimale Zusammenschaltung von kurzen Turbulenzkanälen für den unteren Drehzahlbereich und lange Saugrohre für den oberen Drehzahlbereich, wird der Leistungs- und Drehmomentverlauf der Brennkraftmaschine im gesamten Drehzahlbereich optimiert, d.h. im unteren Drehzahlbereich das Moment und im oberen Drehzahlbereich die Leistung angehoben. Außerdem wird die Verbrennung optimiert und es werden die daraus resultierenden Abgasemissionen positiv beeinflußt.

Gemäß einem bevorzugten Ausführungsbeispiel werden die Saugrohre von Resonanzverbindungsrohren und Saugrohren gebildet. Die Aufteilung der Saugrohre in die Saugrohre und in die Resonanzverbindungsrohre hat den wesentlichen Vorteil, daß auf diese Weise eine weitere Möglichkeit besteht, das Resonanzverhalten zu steuern und insbesondere Querverbindungen zwischen den einzelnen Saugrohren herzustellen.

Dabei entspricht vorteilhaft die Anzahl der Saugrohre bzw. die Anzahl der Turbulenzkanäle der Anzahl der Zylinder. Auf diese Weise besitzt jeder Zylinder seine eigene Luftsäule, deren Schwingungsverhalten exakt auf den jeweiligen Zylinder abgestimmt werden kann.

Vorteilhaft erstrecken sich insbesondere zwei Resonanzverbindungsrohre zwischen dem Vorluftsammler und dem Hauptluftverteiler. Diese Resonanzverbindungsrohre sind in ihrem Querschnitt so gestaltet, daß die erforderliche Verbrennungsluft mit möglichst geringem Widerstand dem Hauptluftverteiler und somit den Saugrohren zugeführt werden kann. Abhängig von der Anzahl der Zylinder bzw. der Saugrohre können auch mehr als zwei oder nur ein einziges Resonanzverbindungsrohr vorgesehen sein.

Vorteilhaft sind die Saugrohre so ausgestaltet, daß ihre Länge variabel ist. Durch die Veränderung der Länge können die Resonanzfrequenzen dieser Saugrohre verändert und an unterschiedliche Drehzahlen bzw. Drehzahlbereiche angepaßt werden. Insbesondere weisen dabei die Saugrohre Saugrohrstutzen auf, wobei die Saugrohrstutzen mit Stellmotoren, z.B. Unterdruckdosen gekoppelt sind und die Saugrohrstutzen in den Hauptluftverteiler hineinragen und axial verschieblich an den Saugrohren gelagert sind. Über die Saugrohrstutzen, die axial an den Saugrohren verschoben werden können, kann die Länge dieser Saugrohre verändert werden, wobei die Verschiebung durch die Stellmotoren bewerkstelligt wird. Diese Stellmotoren werden durch Motorparameter gesteuert. Anstelle von Saugrohrstutzen sind auch geschlitzte Enden der Saugrohre denkbar, wobei die Schlitze mehr oder weniger verschlossen werden können. Dies kann z.B. über einen Schieber erfolgen.

Gemäß einer Weiterbildung ist vorgesehen, daß in der Luftsammeleinrichtung, insbesondere im Turbulenzsammler eine Luftheizung vorgesehen ist. Diese Luftheizung kann z.B. eine elektrische Luftheizung oder ein Luft-Luft- bzw. Luft-Wasser-Wärmetauscher sein. Über diese Luftheizung wird, insbesondere in der kalten Jahreszeit, die Verbrennungsluft vortemperiert, um den Kraftstoffniederschlag im Zylinder zu verringern.

Bei einer Weiterbildung ist vorgesehen, daß in der Luftsammeleinrichtung, insbesondere im Vorluftsammler, ein Ölnebelabscheider vorgesehen ist. Dabei kann der Ölnebelabscheider an einer Stirnseite oder zentral, d.h. mittig in der Luftsammeleinrichtung angeordnet sein. Dieser Ölnebelabscheider kann ein Ventil zur Regelung des Drucks im Kurbelgehäuse aufweisen. Durch die Integration des Ölnebelabscheiders in die Luftsammeleinrichtung wird die Möglichkeit geschaffen, eine Schnittstelle und damit Kosten einzusparen. Außerdem wird die Rückführung der Kurbelgehäusegase in die Verbrennungsräume optimiert. Der Ölnebelabscheider sowie das Ventil werden am Saugrohrmodul entweder angeschraubt oder bevorzugt mittels einer Clip-Verbindung befestigt.

Vorteilhaft ist die Luftsammeleinrichtung zwischen dem Hauptluftverteiler und den Ausläßen aus den Saugrohranlagen angeordnet. Diese Bauart erfordert minimalen Platz und erlaubt eine kompakte Bauweise des gesamten Saugrohrmoduls. Dabei ist vorgesehen, daß sich die Luftsammeleinrichtung und der Hauptluftverteiler quer zu den Saugrohranlagen erstrecken. Durch diese Anordnung können die einzelnen Saugrohre der einen und der anderen Saugrohranlage mit jeweils gleicher Länge und gleichem Querschnitt ausgebildet werden und dabei gleichzeitig an die Luftsammeleinrichtung bzw. den Hauptluftverteiler angeschlossen sein. Diese Anordnung gestattet eine optimale Luftverteilung für alle Saugrohre bzw. Turbulenzkanäle, so daß in diesen im wesentlichen gleiche Strömungsverhältnisse herrschen.

Eine optimale Füllung des Brennraums und Vermischung des Kraftstoffs mit der Verbrennungsluft wird dadurch erreicht, daß die erste Saugrohranlage im wesentlichen tangential in den Brennraum mündet. Bei einem anderen Ausführungsbeispiel werden beide Saugrohranlagen vor der Einmündung in den Brennraum vereinigt.

Eine Optimierung der Turbulenzströmung in den Turbulenzrohren wird dadurch erzielt, daß die Turbulenzrohre, insbesondere im Bereich deren Auslässe, Querschnittsverengungen aufweisen. Auf diese Weise kann die Strömungsgeschwindigkeit erhöht und die Turbulenz beim Einströmen in den Brennraum verbessert werden. Die Strömungsgeschwindigkeit kann Schallgeschwindigkeit erreichen. Die Querschnittsverengungen können entweder sofort durch entsprechende Kerndurchmesser beim Spritzen realisiert werden. Bevorzugt werden die Turbulenzrohre mit größerem Querschnitt hergestellt und es werden dann entsprechende Einsätze auslaßseitig eingeschoben bzw. eingepreßt. Diese Einsätze sind düsenartig ausgebildet und bestehen aus gleichem Material wie die Turbulenzkanäle, was die spätere Entsorgung vereinfacht.

Eine erfindungswesentliche Ausgestaltung besteht darin, daß das Saugrohrmodul ein aus Kunststoff bestehendes Gehäuse aufweist, das aus zwei Gehäuseschalen besteht. Ein derartiges Gehäuse kann auf einfache Weise hergestellt werden, da es lediglich aus zwei Gehäuseschalen besteht, die nach dem Spritzgießvorgang miteinander verbunden werden. Die Gehäuseschalen sind so gestaltet, daß sie ohne die Verwendung verlorener Formen herstellbar sind. Außerdem weisen die Gehäuseschalen einen Umfangswulst auf, so daß sie über eine Außenschweißnaht, die insbesondere durch Vibrationsschweißen erzeugt wird, miteinander verbindbar sind. Die Außenschweißnaht hat den Vorteil, daß sie einfach herstellbar ist und keine komplizierten bzw. aufwendigen Werkzeuge bzw. Schweißvorrichtungen erfordert. Ein weiterer Vorteil wird darin gesehen, daß die Bauelemente des Saugrohrmoduls in die Gehäuseschalen eingelegt sind. Da auf ein Einspritzen verzichtet wird, sind bei der Entsorgung die eingelegten Bauelemente bzw. Inserts problemlos entfernbar, so daß eine sortenreine Entsorgung des Kunststoffgehäuses und Wiederverwendung des Kunststoffes möglich ist.

Vorteilhaft weist in der Einbaulage des Saugrohrmoduls die untere Gehäuseschale die Ansaugstutzen, die Resonanzverbindungsrohre und einen Teil des Hauptluftverteilers auf. Demgegenüber weist die in der Einbaulage obere Gehäuseschale die Saugrohre, einen Teil des Hauptluftverteilers, den Vorluftsammler, den Turbulenzsammler und die Turbulenzkanäle auf. Durch die Verwendung unterschiedlicher oberer Gehäuseschalen kann das Saugrohrmodul an unterschiedliche Motoren, insbesondere unterschiedliche Brennräume bzw. Motorengrößen angepaßt werden. Dabei sind die Fügeflächen gleich gestaltet, jedoch die Saugrohre und Turbulenzkanäle an die Motorparameter angepaßt.

Bei einer anderen Ausführungsform können z.B. die Turbulenzkanäle blind ausgebildet sein, so daß sie nur bei Bedarf durch Ausbrechen von Wandungsstücken freigelegt werden.

Eine Weiterbildung sieht vor, daß die obere Gehäuseschale im Bereich der Ausmündungen der Saugrohranlagen eine integrierte Kraftstoffleiste für Einspritzventile aufweist. Die Einspritzventile werden vorteilhaft an diese Kraftstoffleisten angeclipst und über die Kraftstoffleiste mit dem Kraftstoff versorgt. Es entfallen daher Kraftstoffleitungen zu den einzelnen Einspritzventilen. Außerdem kann in der Kraftstoffleiste der Kraftstoffilter bereits integriert sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im einzelnen beschrieben sind. Dabei zeigen:
- Figur 1: einen schematischen Aufbau eines erfindungsgemäßen Saugrohrmoduls mit andeutungsweise dargestelltem Motor;
- Figur 2: einen Querschnitt durch das Saugrohrmodul;
- Figur 3: eine Seitenansicht auf die Lufteinlaßseite des Saugrohrmoduls;
- Figur 4: einen Querschnitt durch eine Ausführungsform für einen V-Motor mit Saugrohren mit variabler Länge;
- Figur 5: eine Draufsicht auf das Saugrohrmodul und einen Schnitt durch die verschieblich gelagerten Saugrohrstutzen; und
- Figur 6: einen Teilquerschnitt durch das Saugrohrmodul mit angespritzter Kraftstoffleiste.

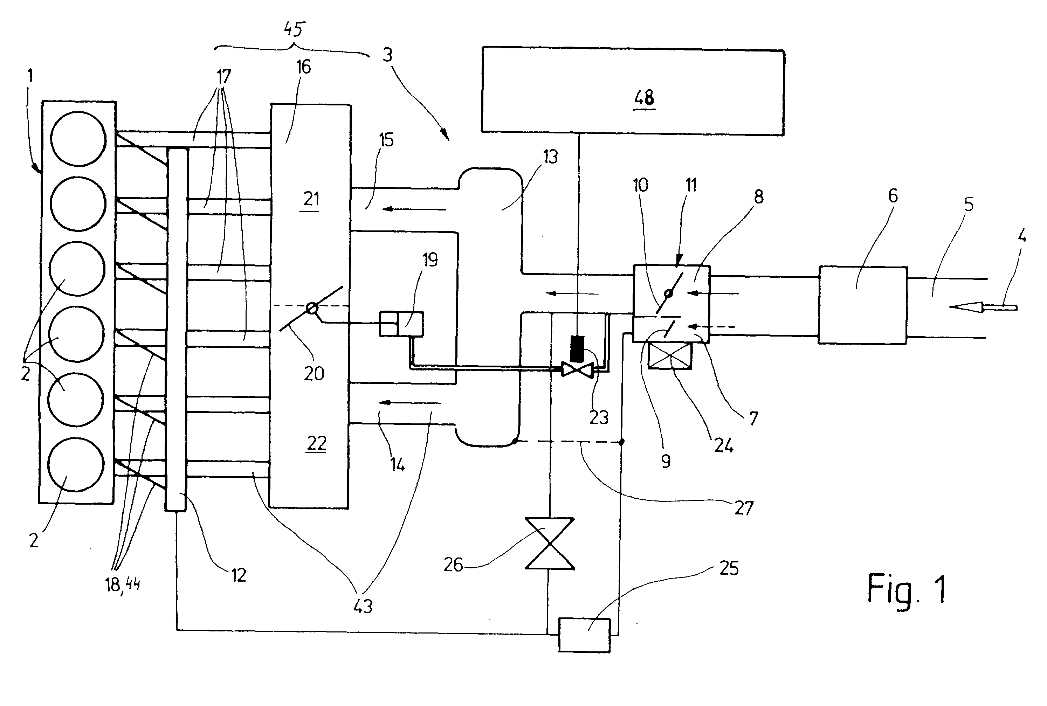

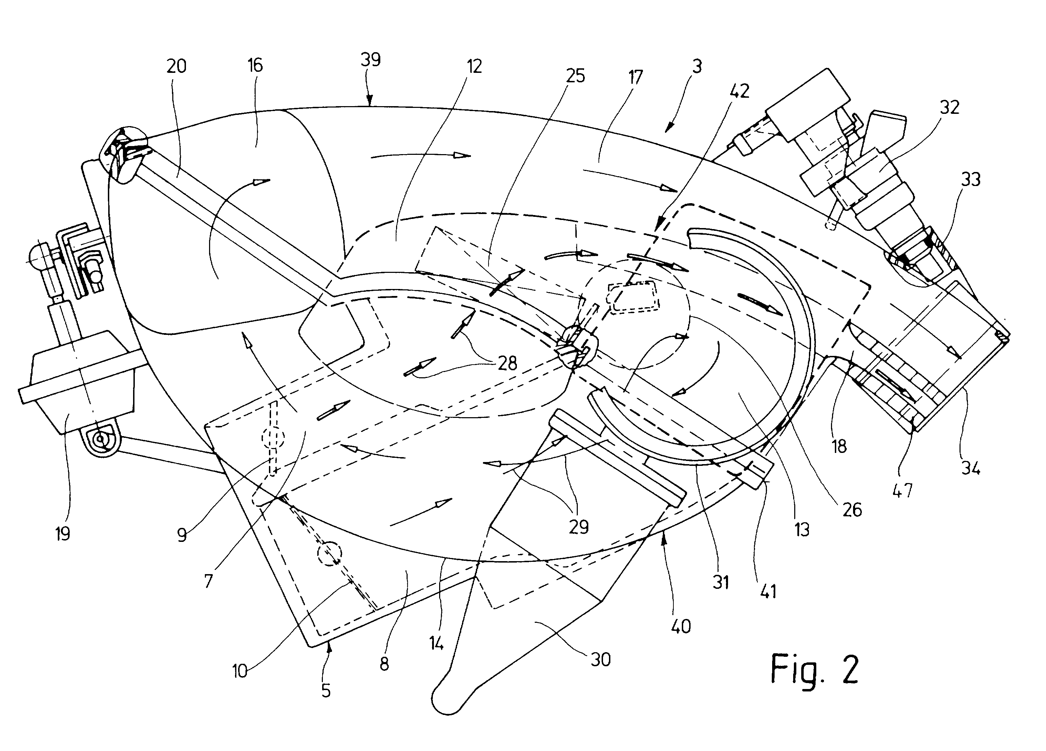

In der Figur 1 ist ein Zylinderkopf 1 mit sechs Zylindern 2 eines Reihenmotors schematisch dargestellt. An diesen Zylinderkopf 1 ist ein insgesamt mit 3 bezeichnetes Saugrohrmodul angeflanscht, über welches die für die Verbrennung erforderliche Luft angesaugt wird. Diese Luft wird über einen nicht dargestellten Luftfilter in Richtung des Pfeils 4 über einen Saugstutzen 5 angesaugt und mittels eines Luftmassenmessers 6 wird die Menge der angesaugten Luft ermittelt. Im Anschluß an den Luftmassenmesser 6 teilt sich der Saugstutzen in einen ersten Ansaugstutzen 7 und in einen zweiten Ansaugstutzen 8 auf. Der Querschnitt eines jeden Ansaugstutzens 7 und 8 ist über eine Drosselklappe 9 und 10 verschließbar. Diese Drosselklappen 9 und 10 sind in einem Registerdrosselklappenstutzen 11 angeordnet, der in einen Turbulenzsammler 12 und in einen Vorluftsammler 13 mündet. Der Turbulenzsammlewr 12 und der Vorluftsammler 13 bilden eine Luftsammeleinrichtung 42 (Figur 2). Von dieser Luftsammeleinrichtung 42 wird die angesaugte Luft über Saugrohranlagen 44 und 45 den Zylindern 2 zugeführt, indem im Vorluftsammler 13 die Luft auf zwei Resonanzverbindungsrohre 14 und 15 aufgeteilt wird und einem Hauptluftverteiler 16 zugeführt wird. Dieser verteilt die Luft gleichmäßig auf Saugrohre 17, die in die Zylinder 2 einmünden. Dabei bilden die Resonanzverbindungsrohre 14 und 15 und die Saugrohre 17 Resonanzkanäle 43. Die Luft des Turbulenzkanalsammlers 12 wird von diesem auf Turbulenzkanäle 18 verteilt, die ebenfalls in die Zylinder 2 einmünden. Dabei sind die Turbulenzkanäle 18 und Saugrohre 17 derart ausgestaltet, daß die Turbulenzkanäle 18 im wesentlichen tangential und die Saugrohre 17 im wesentlichen axial und/oder radial in die Zylinder 2 einmünden. Auf diese Weise wird eine optimale Befüllung sowie Vermischung des eingespritzten Kraftstoffs mit der Verbrennungsluft erzielt.

Die Saugrohranlage 44 wird also von den Turbulenzkanälen 18 und die Saugrohranlage 45 wird von den Resonanzverbindungsrohren 14 und 15, dem Hauptluftverteiler 16 und den Saugrohren 17 gebildet.

Aus Figur 1 ist deutlich erkennbar, daß sich der Turbulenzsammler 12, der Vorluftsammler 13 und der Hauptluftverteiler 16 quer zu den Saugrohren 17 und Turbulenzkanälen 18 erstrecken. Die Drosselklappen 9 und 10 werden abhängig von motorischen Parametern über ein Stellglieder angesteuert. Dies erfolgt bei der Drosselklappe 9 z.B. über das Stellglied 24. Ein Stellglied 19 wirkt auf eine Resonanzsteuerklappe 20, die im Hauptluftverteiler 16 angeordnet ist, und diesen in zwei Kammern 21 und 22 unterteilt. Es können auch mehrere Resonanzsteuerklappen vorgesehen sein, die den Hauptluftverteiler 16 in mehrere Kammern unterteilen. Auf diese Weise können mehrere Saugrohre 17 miteinander in Verbindung stehen. Über die Resonanzsteuerklappe 20 wird das Resonanzverhalten der Saugrohre 17 beeinflußt. Das Stellglied 19 wird über ein Magnetventil mit Unterdruck versorgt, welches das Stellglied 19 mit einem unterdruckführenden Kanal verbindet. Das Magnetventil 23 selbst wird von der Motorelektronik 48 angesteuert. Die Drosselklappe 9 wird über einen Leerlaufsteller 24 verstellt, so daß im Leerlauf lediglich über den Ansaugstutzen 7 im Turbulenzsammler 12 und von diesem über die Turbulenzkanäle 18 den Zylindern 2 Verbrennungsluft zugeführt wird.

Zur Optimierung der Verbrennung im Leerlauf und bei niedriger Drehzahl oder geringer Last ist es von Vorteil, die Verbrennungsluft bei entsprechender Umgebungstemperatur zu erwärmen. Hierfür ist ein Heizsystem 25 vorgesehen, welches adaptierbar ist. Außerdem kann über ein Kaltstartventil 26 der Vorluftsammler 13 mit dem Turbulenzsammler 12 verbunden werden. Insbesondere beim Übergang in den niederen Drehzahlbereich öffnet dieses Kaltstartventil 26, wodurch eine Teilmenge der Verbrennungsluft über den Vorluftsammler 13, den Hauptluftverteiler 16 und den Saugrohren 17 den Zylindern 2 zugeführt wird. Durch dieses als Bypaß dienende Kaltstartventil 26 wird die Möglichkeit geschaffen, den Strömungswiderstand des Saugrohrmoduls 3 zu reduzieren und die Turbulenzbildung im System zu verbessern. Auch dieses Kaltstartventil 26 wird durch Motorparameter gesteuert.

Mit der Linie 27 ist eine alternative Variante dargestellt, bei der die den Ansaugstutzen 7 passierende Leerlaufluft nicht dem Turbulenzsammler 12, sondern dem Vorluftsammler, dem Hauptluftverteiler 16 und den Saugrohren 17 zugeführt wird. Der Turbulenzsammler 12 und die Turbulenzkanäle 18 sind bei dieser Variante blind ausgebildet.

Die Figur 2 zeigt einen Querschnitt durch das Saugrohrmodul 3, wobei in der linken unteren Hälfte der Saugstutzen 5 mit dem Ansaugstutzen 7 und dem Ansaugstutzen 8 dargestellt ist. Es sind deutlich die Drosselklappen 9 und 10 erkennbar, über die die Leerlaufluft bzw. die Vollastluft angesaugt wird. Die über den Ansaugstutzen 7 angesaugte Luft gelangt entsprechend der Pfeile 28 vom Ansaugstutzen 7 in den Turbulenzsammler 12 und von diesem in die Turbulenzkanäle 18. Dabei durchtritt die Leerlaufluft das Heizsystem 25.

Öffnet die Drosselklappe 10, dann gelangt die zusätzlich angesaugte Luft über den Ansaugstutzen 8 in Richtung der Pfeile 29 zum Vorluftsammler 13, wo die Luft auf die beiden Resonanzverbindungsrohre 14 und 15, von denen in der Figur 2 lediglich eines dargestellt ist, aufgeteilt wird. Über dieses Resonanzverbindungsrohr 14 gelangt die Luft in den Hauptluftverteiler 16, wo sie auf die Saugrohre 17 aufgeteilt wird. Im Hauptluftverteiler 16 ist die Resonanzsteuerklappe 20 erkennbar, die vom Stellglied 19 verstellt wird. Außerdem ist in Figur 2 erkennbar, daß der Turbulenzsammler 12 und der Vorluftsammler 13 über das Kaltstartventil 26 miteinander verbindbar sind, so daß die über den Ansaugstutzen 7 in den Turbulenzsammler 12 angesaugte Luft teilweise in den Vorluftsammler 13 übergeleitet werden kann.

In Figur 2 ist außerdem ein Ölnebelabscheider 30 dargestellt, der zusammen mit einem Ventil 31 zur Regelung des Drucks im Kurbelgehäuse dient. Durch die Integration des Ölnebelabscheiders 30 wird die Möglichkeit geschaffen, eine Schnittstelle im Motor und damit Kosten einzusparen, wobei gleichzeitig die Rückführung der Kurbelgehäusegase in die Verbrennungsräume optimiert wird. Der Ölnebelabscheider 30 wird am Saugrohrmodul 3 mittels Clip-Verbindung befestigt.

Schließlich ist in Figur 2 ein Einspritzventil 32 dargestellt, welches in eine geeignete Aufnahme 33 am Saugrohrmodul im Bereich des Auslasses 34 der Saugrohre 17 eingesteckt ist. Im auslaßseitigen Ende der Turbulenzkanäle 18 befinden sich Einsätze 47, die einen sich düsenartig verändernden Durchlaßquerschnitt aufweisen. Durch die Querschnittsverengung wird die Strömungsgeschwindigkeit der angesaugten Luft erhöht und dadurch das Turbulenzverhalten verbessert. Die Einsätze 47 sind vorteilhaft eingepreßt bzw. eingeklebt und bestehen aus dem gleichen Material wie die Turbulenzkanäle 18 selbst.

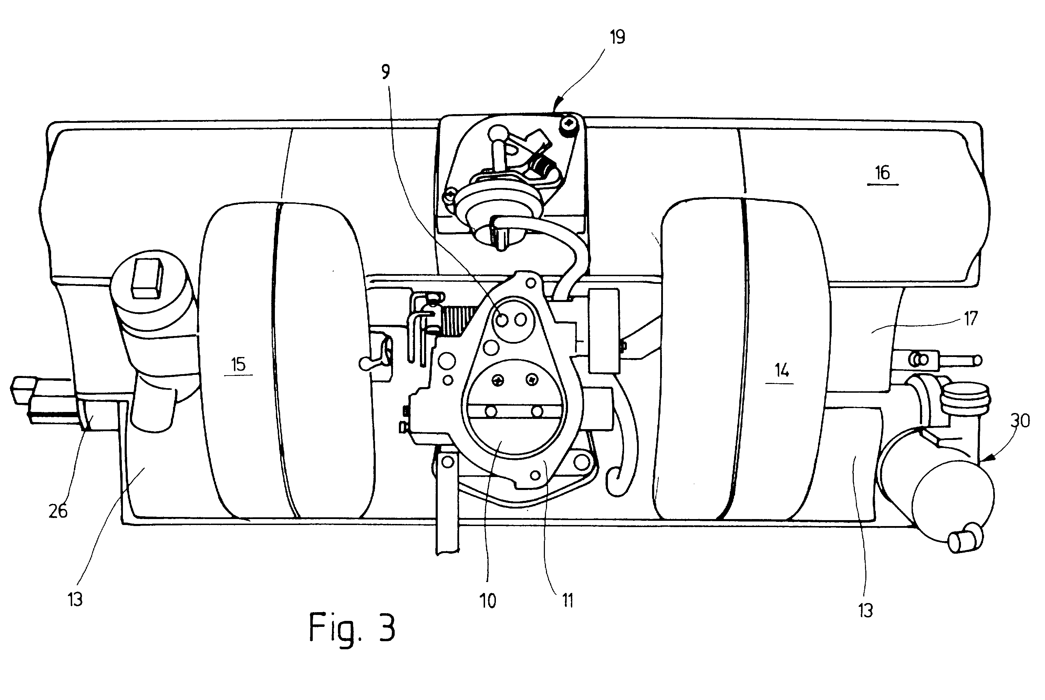

In der in Figur 3 dargestellten Seitenansicht sind deutlich die beiden Resonanzverbindungsrohre 14 und 15 sowie der Hauptluftverteiler 16 mit dem Stellglied 19 erkennbar. Zwischen den beiden Resonanzverbindungsrohren 14 und 15 befindet sich der Registerdrosselklappenstutzen 11 mit den beiden Drosselklappen 9 und 10, wobei die obere Drosselklappe 9 die Menge der Leerlaufluft steuert. Rechts neben dem Vorluftsammler 13 befindet sich der Ölnebelabscheider 30 und auf der linken Seite ist neben dem Vorluftsammler 13 das Kaltstartventil 26 vorgesehen.

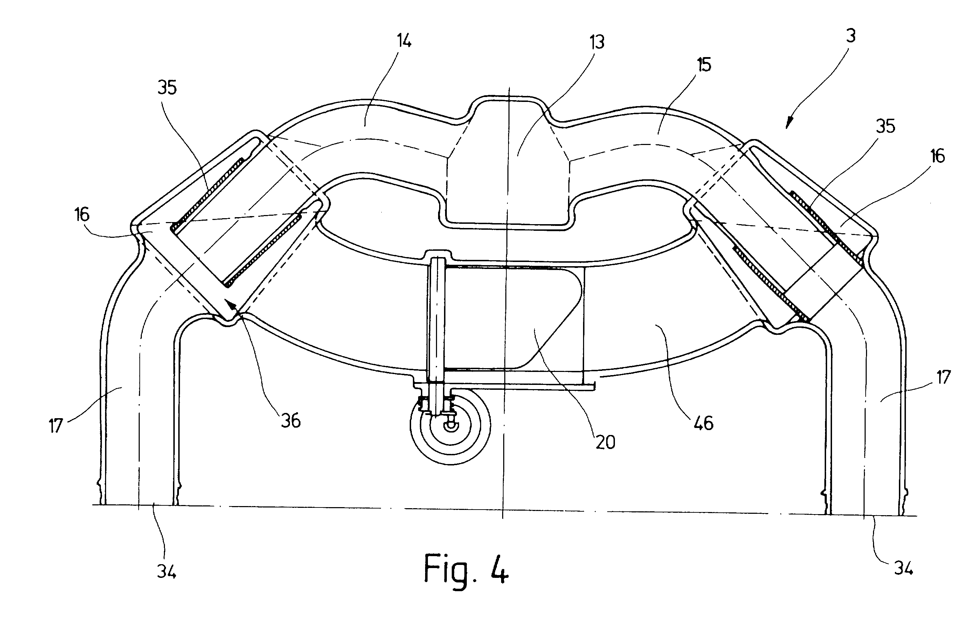

Die Figur 4 zeigt eine Variante des Saugrohrmoduls 3 für eine Brennkraftmaschine mit V-förmig angeordneten Zylindern. Bei dieser Ausführungsform sind die Resonanzverbindungsrohre 14 und 15 mit Saugrohrstutzen 35 versehen, die koaxial auf die Enden der Resonanzverbindungsrohre 14 und 15 aufgeschoben sind. Die Saugrohrstutzen 35 sind über geeignete Vorrichtungen, die weiter unten beschrieben sind, auf den Resonanzverbindungsrohren 14 und 15 in axialer Richtung verschieblich gelagert. Durch Verschiebung der Saugrohrstutzen 35 wird das Resonanzverhalten der Saugrohre 17 verändert. Auf diese Weise können die Saugrohre 17 für den unteren Drehzahlbereich verlängert werden, wodurch das Drehmoment des Motors erhöht wird. Für den oberen Drehzahlbereich, z.B. ab 4000 ¹/min, werden die Saugrohre 17 verkürzt, was zu einer Leistungssteigerung führt.

Die Saugrohrstutzen 35 befinden sich im Hauptluftverteiler 16, der außerdem bei eingezogenen Saugrohrstutzen 35 die Saugrohre 17 miteinander verbindet. Außerdem ist in Figur 4 ein Überströmkanal 46 dargestellt, der die beiden Hauptluftverteiler 16 miteinander verbindet und dadurch einen Gas- und Druckaustausch zwischen der linken Saugrohrreihe und der rechten Saugrohrreihe offenbart, wodurch das Resonanzverhalten gezielt steuerbar ist. Mittels der Resonanzsteuerklappe 20, die beim Ausführungsbeispiel der Figur 2 im Hauptluftverteiler 16 vorgesehen ist, kann der Überströmkanal 46 abgesperrt werden.

In der linken Hälfte ist in Figur 4 ein Saugrohrstutzen 35 dargestellt, der vollständig auf das Resonanzverbindungsrohr 14 aufgeschoben ist und einen Bypaß 36 freigibt. Bei der rechten Darstellung ist der Saugrohrstutzen 35 vollständig ausgefahren und schließt dabei den Bypaß 36, so daß die Luft ungehindert bis zum Auslaß 34 durchströmen kann. Bei dieser Lage des Saugrohrstutzens 35 ist die Säule der im Saugrohr 17 schwingenden Luftmasse wesentlich länger als bei geöffnetem Saugrohrstutzen 35, wie in Figur 4 links dargestellt. Dort sind die einzelnen Saugrohre 17 über den Bypaß 36 miteinander verbunden, wohingegen in der rechten Darstellung diese Verbindung unterbrochen ist.

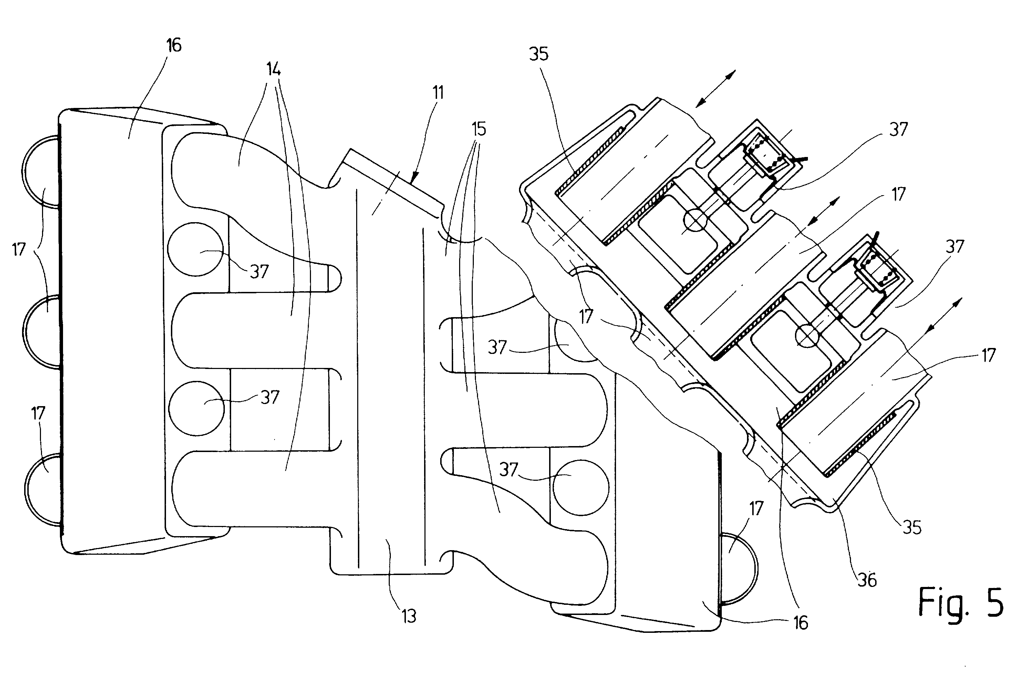

In der Figur 5 ist zur Verstellung der Saugrohrstutzen 35 ein eine Membran aufweisendes Stellglied 37 dargestellt, welches über Motorparameter angesteuert wird.

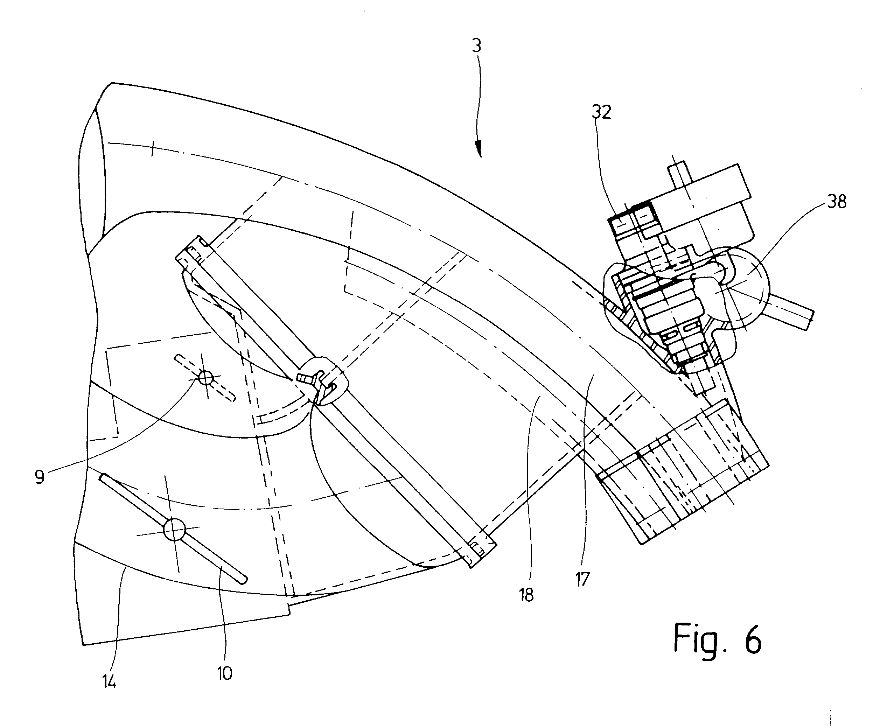

Die Figur 6 zeigt den auslaßseitigen Bereich des Saugrohrmoduls 3 mit einer integrierten Kraftstoffleiste 38, über die der Kraftstoff den einzelnen Einspritzventilen 32 zugeführt wird. Diese Kraftstoffleiste 38 kann mit einem integrierten Kraftstoffilter versehen sein und, falls erforderlich, Steuerungselemente aufweisen, z.B. ein Absteuerventil vor dem Filter.

In Figur 2 ist deutlich erkennbar, daß das gesamte Saugrohrmodul 3 aus zwei Gehäuseschalen 39 und 40 besteht, die über eine einzige Trennfuge 41 aneinander anliegen und miteinander verschweißt sind. Die Verschweißung erfolgt dabei vorteilhaft durch Virbrationsschweißen. Die beiden Kunststoffspritzteile sind so gefertigt, daß sie ohne die Verwendung verlorener Formen herstellbar sind und daß alle eingebauten Elemente nach dem Herstellen der Gehäuseschalen 39 und 40 einsetzbar sind. Es sind also keine Bauteile eingespritzt. Dies ermöglicht ein einfaches späteres Recyclen des gesamten Saugrohrmoduls 3.

Bei einer Ausführungsform sind die Turbulenzkanäle 18 blind ausgeführt, so daß die Leerlaufluft über den Weg des Kaltstartventils 26, welches bei dieser Ausführungsform anders ausgeführt ist, dem Vorluftsammler 13 und schließlich den Saugrohren 17 zugeführt wird. Auf diese Weise kann das Saugrohrmodul 3 an verschiedene Motortypen angepaßt werden. Denkbar ist auch, daß die untere Gehäuseschale 40 mit verschieden ausgebildeten oberen Gehäuseschalen 39 kombinierbar ist, wobei die obere Gehäuseschale 39 jeweils speziell auf einen bestimmten Motorentyp zugeschnitten ist.

## Patentansprüche

1. Saugrohrmodul für eine wenigstens einen Zylinder (2) aufweisende Brennkraftmaschine mit einer Luftsammeleinrichtung (42) für die Verbrennungsluft, mit einer Turbulenzkanäle (18) aufweisenden ersten Saugrohranlage (44) und einer Resonanzkanäle (43) aufweisenden zweiten Saugrohranlage (45), wobei die Saugrohranlagen (44 und 45) mit der Luftsammeleinrichtung (42) und den Zylindern (2) verbunden sind, wobei in der zweiten Saugrohranlage (45) ein wenigstens zwei Resonanzkanäle (43) miteinander verbindender Hauptluftverteiler (16) angeordnet ist, dadurch gekennzeichnet, daß der Hauptluftverteiler (16) wenigstens eine Resonanzsteuerklappe (20) aufweist, über die die Anzahl der miteinander zu verbindenden Resonanzkanäle (43) variierbar ist.

2. Saugrohrmodul nach einem der vorhergehenden Ansprüche, dadurch gekennzeichnet, daß die erste Saugrohranlage (44) im wesentlichen tangential in den Zylinder (2) mündet.

3. Saugrohrmodul nach einem der vorhergehenden Ansprüche, dadurch gekennzeichnet, daß die Luftsammeleinrichtung (42) von einem Vorluftsammler (13) und einem Turbulenzsammler (12) gebildet wird.

4. Saugrohrmodul nach Anspruch 3, dadurch gekennzeichnet, daß der Vorluftsammler (13) und der Turbulenzsammler (12) separate Ansaugstutzen (7 und 8) aufweisen.

5. Saugrohrmodul nach Anspruch 3 oder 4, dadurch gekennzeichnet, daß der Vorluftsammler (13) und der Turbulenzsammler (12) über einen durch ein Ventil (26) steuerbaren Bypaß miteinander verbindbar sind.

6. Saugrohrmodul nach Anspruch 4, dadurch gekennzeichnet, daß die Ansaugquerschnitte der beiden separaten Ansaugstutzen (7 und 8) über Registerdrosselklappen (9 und 10) variierbar sind.

7. Saugrohrmodul nach einem der vorhergehenden Ansprüche, dadurch gekennzeichnet, daß die Turbulenzkanäle (18) relativ kurz sind und die Verbrennungsluft für den unteren Drehzahlbereich führen.

8. Saugrohrmodul nach einem der vorhergehenden Ansprüche, dadurch gekennzeichnet, daß die Resonanzkanäle (43) relativ lang sind und die Verbrennungsluft für den oberen Drehzahlbereich führen.

9. Saugrohrmodul nach einem der vorhergehenden Ansprüche, dadurch gekennzeichnet, daß die Resonanzkanäle (43) von Resonanzverbindungsrohren (14 und 15) und von Saugrohren (17) gebildet werden.

10. Saugrohrmodul nach Anspruch 9, dadurch gekennzeichnet, daß die Anzahl der Saugrohre (17) der Anzahl der Zylinder (2) entspricht.

11. Saugrohrmodul nach einem der vorhergehenden Ansprüche, dadurch gekennzeichnet, daß die Anzahl der Turbulenzkanäle (18) der Anzahl der Zylinder (2) entspricht.

12. Saugrohrmodul nach Anspruch 9 und 10, dadurch gekennzeichnet, daß sich insbesondere zwei Resonanzverbindungsrohre (14 und 15) zwischen dem Vorluftsammler (13) und dem Hauptluftverteiler (16) erstrecken.

13. Saugrohrmodul nach einem der Ansprüche 9 bis 12, dadurch gekennzeichnet, daß die Länge der Saugrohre (17) variabel ist.

14. Saugrohrmodul nach Anspruch 13, dadurch gekennzeichnet, daß die Saugrohre (17) Saugrohrstutzen (35) aufweisen, daß die Saugrohrstutzen (35) mit Stellmotoren, insbesondere Unterdruckdosen (37) gekoppelt sind und daß die Saugrohrstutzen (35) in den Hauptluftverteiler (16) ragen und axial verschieblich an den Saugrohren (17) gelagert sind.

15. Saugrohrmodul nach einem der vorhergehenden Ansprüche, dadurch gekennzeichnet, daß in der Luftsammeleinrichtung (42), insbesondere im Turbulenzsammler (12), eine Luftheizung (25) vorgesehen ist.

16. Saugrohrmodul nach einem der vorhergehenden Ansprüche, dadurch gekennzeichnet, daß in der Luftsammeleinrichtung (42), insbesondere im Vorluftsammler (13) ein Ölnebelabscheider (30) vorgesehen ist.

17. Saugrohrmodul nach Anspruch 16, dadurch gekennzeichnet, daß der Ölnebelabscheider (30) an einer Stirnseite oder zentral, d.h. mittig in der Luftsammeleinrichtung (42) angeordnet ist.

18. Saugrohrmodul nach einem der vorhergehenden Ansprüche, dadurch gekennzeichnet, daß die Luftsammeleinrichtung (42) zwischen dem Hauptluftverteiler (16) und den Auslässen (34) aus den Saugrohranlagen (44 und 45) angeordnet ist.

19. Saugrohrmodul nach einem der vorhergehenden Ansprüche, dadurch gekennzeichnet, daß sich die Luftsammeleinrichtung (42) und der Hauptluftverteiler (16) quer zu den Saugrohranlagen (44 und 45) erstrecken.

20. Saugrohrmodul nach einem der vorhergehenden Ansprüche, dadurch gekennzeichnet, daß das Saugrohrmodul (3) ein aus Kunststoff bestehendes Gehäuse aufweist, das aus zwei Gehäuseschalen (39 und 40) besteht.

21. Saugrohrmodul nach Anspruch 20, dadurch gekennzeichnet, daß die beiden Gehäuseschalen (39 und 40) über eine Außenschweißnaht, die inbesondere durch Vibrationsschweißen erzeugt wird, miteinander verbunden sind.

22. Saugrohrmodul nach Anspruch 20 oder 21, dadurch gekennzeichnet, daß die Bauelemente des Saugrohrmoduls (3) in die Gehäuseschalen (39 und 40) eingelegt sind.

23. Saugrohrmodul nach einem der Ansprüche 20 bis 22, dadurch gekennzeichnet, daß die in Einbaulage untere Gehäuseschale (40) die Ansaugstutzen (7 und 8), die Resonanzverbindungsrohre (14 und 15) und einen Teil des Hauptluftverteilers (16) bildet.

24. Saugrohrmodul nach einem der Ansprüche 20 bis 23, dadurch gekennzeichnet, daß die in Einbaulage obere Gehäuseschale (39) die Saugrohre (17) einen Teil des Hauptluftverteilers (16), den Vorluftsammler (13), den Turbulenzsammler (12) und die Turbulenzkanäle (18) bildet.

25. Saugrohrmodul nach Anspruch 24, dadurch gekennzeichnet, daß die obere Gehäuseschale (39) im Bereich der Auslässe (34) eine integrierte Kraftstoffleiste (38) für Einspritzventile (32) aufweist.

26. Saugrohrmodul nach einem der vorhergehenden Ansprüche, dadurch gekennzeichnet, daß die Turbulenzkanäle (18) Querschnittsverengungen aufweisen.

27. Saugrohrmodul nach Anspruch 26, dadurch gekennzeichnet, daß die Querschnittsverengungen durch insbesondere auslaßseitig einschiebbare bzw. einpreßbare Einsätze erzielt werden.

28. Saugrohrmodul nach Anspruch 27, dadurch gekennzeichnet, daß die Einsätze einen sich düsenartig verändernden Durchlaßquerschnitt aufweisen.

## Claims

1. Induction manifold module for an internal-combustion engine comprising at least one cylinder (2) with an air collecting arrangement (42) for the air for combustion, with a first induction manifold device (44) comprising turbulence ducts (18) and a second induction manifold device (45) comprising resonance ducts (43), wherein the induction manifold devices (44 and 45) are connected to the air collecting arrangement (42) and the cylinders (2), wherein a main air distributor (16) connecting at least two resonance ducts (43) to one another is arranged in the second induction manifold device (45), characterized in that the main air distributor (16) comprises at least one resonance control flap (20) by means of which the number of resonance ducts (43) to be connected to one another can be varied.

2. Induction manifold module according to one of the preceding claims, characterized in that the first induction manifold device (44) opens substantially tangentially into the cylinder (2).

3. Induction manifold module according to one of the preceding claims, characterized in that the air collecting arrangement (42) is formed by a preliminary air collector (13) and a turbulence collector (12).

4. Induction manifold module according to claim 3, characterized in that the preliminary air collector (13) and the turbulence collector (12) have separate intake sleeves (7 and 8).

5. Induction manifold module according to claim 3 or 4, characterized in that the preliminary air collector (13) and the turbulence collector (12) are connected to one another via a bypass which can be controlled by a valve (26).

6. Induction manifold module according to claim 4, characterized in that the intake cross sections of the two separate intake sleeves (7 and 8) can be varied via register butterfly valves (9 and 10).

7. Induction manifold module according to one of the preceding claims, characterized in that the turbulence ducts (18) are relatively short and guide the air for combustion for the lower speed range.

8. Induction manifold module according to one of the preceding claims, characterized in that the resonance ducts (43) are relatively long and guide the air for combustion for the upper speed range.

9. Induction manifold module according to one of the preceding claims, characterized in that the resonance ducts (43) are formed by resonance connecting pipes (14 and 15) and by induction manifolds (17).

10. Induction manifold module according to claim 9, characterized in that the number of induction manifolds (17) corresponds to the number of cylinders (2).

11. Induction manifold module according to one of the preceding claims, characterized in that the number of turbulence ducts (18) corresponds to the number of cylinders (2).

12. Induction manifold module according to claims 9 and 10, characterized in that, in particular, two resonance connecting pipes (14 and 15) extend between the preliminary air collector (13) and the main air distributor (16).

13. Induction manifold module according to one of claims 9 to 12, characterized in that the length of the induction manifolds (17) is variable.

14. Induction manifold module according to claim 13, characterized in that the induction manifolds (17) comprise induction manifold sleeves (35), in that the induction manifold sleeves (35) are coupled to servomotors, in particular vacuum dash pots (37) and in that the induction manifold sleeves (35) project into the main air distributor (16) and are mounted axially displaceably on the induction manifolds (17).

15. Induction manifold module according to one of the preceding claims, characterized in that an air heater (25) is provided in the air collecting arrangement (42), in particular in the turbulence collector (12).

16. Induction manifold module according to one of the preceding claims, characterized in that an oil mist separator (30) is provided in the air collecting arrangement (42), in particular in the preliminary air collector (13).

17. Induction manifold module according to claim 16, characterized in that the oil mist separator (30) is arranged on one end face or centrally, i.e. in the middle of the air collecting arrangement (42).

18. Induction manifold module according to one of the preceding claims, characterized in that the air collecting arrangement (42) is arranged between the main air distributor (16) and the outlets (34) from the induction manifold devices (44 and 45).

19. Induction manifold module according to one of the preceding claims, characterized in that the air collecting arrangement (42) and the main air distributor (16) extend transversely to the induction manifold devices (44 and 45).

20. Induction manifold module according to one of the preceding claims, characterized in that the induction manifold module (3) has a casing which is made of plastics material and consists of two casing shells (39 and 40).

21. Induction manifold module according to claim 20, characterized in that the two casing shells (39 and 40) are connected to one another by an external weld seam produced, in particular, by vibration welding.

22. Induction manifold module according to claim 20 or 21, characterized in that the components of the induction manifold module (3) are inserted into the casing shells (39 and 40).

23. Induction manifold module according to one of claims 20 to 22, characterized in that the lower casing shell (40) in the fitted position forms the intake sleeves (7 and 8), the resonance connecting pipes (14 and 15) and part of the main air distributor (16).

24. Induction manifold module according to one of claims 20 to 23, characterized in that the casing shell (39) which is at the top in the fitted position forms the induction manifolds (17), part of the main air distributor (16), the preliminary air collector (13), the turbulence collector (12) and the turbulence ducts (18).

25. Induction manifold module according to claim 24, characterized in that the upper casing shell (39) has an integrated fuel rail (38) for injection valves (32) in the region of the outlets (34).

26. Induction manifold module according to one of the preceding claims, characterized in that the turbulence ducts (18) have reductions in cross section.

27. Induction manifold module according to claim 26, characterized in that the reductions in cross section are achieved by inserts which can be inserted or pressed in, in particular on the outlet side.

28. Induction manifold module according to claim 27, characterized in that the inserts have a passage cross section which varies in the manner of a nozzle.

## Revendications

1. Module de tuyaux d'admission pour un moteur à combustion interne présentant au moins un cylindre (2), comportant un dispositif collecteur d'air (42) pour l'air de combustion, un premier système de tuyaux d'admission (44) présentant des canaux de turbulence (18) et un deuxième système de tuyaux d'admission (45) présentant des canaux de résonance (43), les systèmes de tuyaux d'admission (44 et 45) étant reliés au dispositif collecteur d'air (42) et aux cylindres (2), dans le deuxième système de tuyaux d'admission (45) étant placé un distributeur d'air principal (16) reliant entre eux au moins deux canaux de résonance (43), caractérisé par le fait que le distributeur d'air principal (16) présente au moins un papillon de commande de résonance (20) qui permet de faire varier le nombre des canaux de résonance (43) à relier entre eux.

2. Module de tuyaux d'admission selon la revendication 1, caractérisé par le fait que le premier système de tuyaux d'admission (44) débouche sensiblement tangentiellement dans le cylindre (2).

3. Module de tuyaux d'admission selon l'une des revendications précédentes, caractérisé par le fait que le dispositif collecteur d'air (42) est formé d'un précollecteur d'air (13) et d'un collecteur de turbulence (12).

4. Module de tuyaux d'admission selon la revendication 3, caractérisé par le fait que le précollecteur d'air (13) et le collecteur de turbulence (12) présentent des tubulures d'aspiration séparées (7 et 8).

5. Module de tuyaux d'admission selon l'une des revendications 3 et 4, caractérisé par le fait que le précollecteur d'air (13) et le collecteur de turbulence (12) peuvent être reliés par une dérivation pouvant être commandée par une vanne (26).

6. Module de tuyaux d'admission selon la revendication 4, caractérisé par le fait que les sections d'aspiration des deux tubulures d'aspiration séparées (7 et 8) peuvent être modifiées au moyen de papillons registres (9 et 10).

7. Module de tuyaux d'admission selon l'une des revendications précédentes, caractérisé par le fait que les canaux de turbulence (18) sont relativement courts et conduisent l'air de combustion pour la gamme inférieure de régimes.

8. Module de tuyaux d'admission selon l'une des revendications précédentes, caractérisé par le fait que les canaux de résonance (43) sont relativement longs et conduisent l'air de combustion pour la gamme supérieure de régimes.

9. Module de tuyaux d'admission selon l'une des revendications précédentes, caractérisé par le fait que les canaux de résonance (43) sont formés par des tuyaux de liaison de résonance (14 et 15) et des tuyaux d'admission (17).

10. Module de tuyaux d'admission selon la revendication 9, caractérisé par le fait que le nombre des tuyaux d'admission (17) correspond au nombre des cylindres (2).

11. Module de tuyaux d'admission selon l'une des revendications précédentes, caractérisé par le fait que le nombre des canaux de turbulence (18) correspond au nombre des cylindres (2).

12. Module de tuyaux d'admission selon les revendications 9 et 10, caractérisé par le fait qu'en particulier deux tuyaux de liaison de résonance (14 et 15) s'étendent entre le précollecteur d'air (13) et le distributeur d'air principal (16).

13. Module de tuyaux d'admission selon l'une des revendications 9 à 12, caractérisé par le fait que la longueur des tuyaux d'admission (17) est variable.

14. Module de tuyaux d'admission selon la revendication 13, caractérisé par le fait que les tuyaux d'admission (17) présentent des tubulures (35), que ces tubulures (35) sont accouplées à des servomoteurs, en particulier à des boîtes à dépression (37), et que ces tubulures (35) entrent dans le distributeur d'air principal (16) et sont montées mobiles axialement sur les tuyaux d'admission (17).

15. Module de tuyaux d'admission selon l'une des revendications précédentes, caractérisé par le fait que dans le dispositif collecteur d'air (42), en particulier dans le collecteur de turbulence (12), est prévu un système de chauffage d'air (25).

16. Module de tuyaux d'admission selon l'une des revendications précédentes, caractérisé par le fait que dans le dispositif collecteur d'air (42), en particulier dans le précollecteur d'air (13), est prévu un séparateur de brouillard d'huile (30).

17. Module de tuyaux d'admission selon la revendication 16, caractérisé par le fait que le séparateur de brouillard d'huile (30) est placé sur un côté frontal ou au centre, c'est-à-dire au milieu du dispositif collecteur d'air (42).

18. Module de tuyaux d'admission selon l'une des revendications précédentes, caractérisé par le fait que le dispositif collecteur d'air (42) est placé entre le distributeur d'air principal (16) et les sorties (34) des systèmes de tuyaux d'admission (44 et 45).

19. Module de tuyaux d'admission selon l'une des revendications précédentes, caractérisé par le fait que le dispositif collecteur d'air (42) et le distributeur d'air principal (16) s'étendent perpendiculairement aux systèmes de tuyaux d'admission (44 et 45).

20. Module de tuyaux d'admission selon l'une des revendications précédentes, caractérisé par le fait que ce module (3) présente un boîtier en plastique qui est constitué de deux coques (39 et 40).

21. Module de tuyaux d'admission selon la revendication 20, caractérisé par le fait que les deux coques (39 et 40) du boîtier sont assemblées par un cordon de soudure extérieur qui est produit en particulier par soudage par vibrations.

22. Module de tuyaux d'admission selon l'une des revendications 20 et 21, caractérisé par le fait que les éléments de ce module (3) sont placés dans les coques (39 et 40) du boîtier.

23. Module de tuyaux d'admission selon l'une des revendications 20 à 22, caractérisé par le fait que la coque de boîtier inférieure en position montée (40) forme les tubulures d'aspiration (7 et 8), les tuyaux de liaison de résonance (14 et 15) et une partie du distributeur d'air principal (16).

24. Module de tuyaux d'admission selon l'une des revendications 20 à 23, caractérisé par le fait que la coque de boîtier supérieure en position montée (39) forme les tuyaux d'admission (17), une partie du distributeur d'air principal (16), le précollecteur d'air (13), le collecteur de turbulence (12) et les canaux de turbulence (18).

25. Module de tuyaux d'admission selon la revendication 24, caractérisé par le fait que la coque de boîtier supérieure (39) présente dans la zone des sorties (34) une barrette à carburant intégrée (38) pour des injecteurs (32).

26. Module de tuyaux d'admission selon l'une des revendications précédentes, caractérisé par le fait que les canaux de turbulence (18) présentent des rétrécissements de section.

27. Module de tuyaux d'admission selon la revendication 26, caractérisé par le fait que les rétrécissements de section sont produits par des éléments rapportés, en particulier pouvant être glissés ou enfoncés côté sortie.

28. Module de tuyaux d'admission selon la revendication 27, caractérisé par le fait que les éléments rapportés présentent une section de passage qui varie à la manière d'une tuyère.
